# EUROPÄISCHE PATENTSCHRIFT

(11) **EP 0 706 962 B1**
(45) Veröffentlichungstag und Bekanntmachung des Hinweises auf die Patenterteilung: **30.09.1998**
(21) Anmeldenummer: 95250211.0
(22) Anmeldetag: 29.08.1995
(51) Int. Cl.: B65G 63/00

(54) **Vorrichtung zum Güterumschlag von Ladungseinheiten, insbesondere von Containern**
Device for transferring load units, particularly freight containers
Dispositif pour le transbordement d'unités de charge en particulier de conteneurs

(30) Priorität: 13.10.1994 DE 4437815
(43) Veröffentlichungstag der Anmeldung: 17.04.1996
(73) Patentinhaber: MANNESMANN Aktiengesellschaft, 40213 Düsseldorf (DE)
(72) Erfinder: Büdenbender, Winfried, D-57462 Olpe-Bruch (DE); Möller, Lutz, D-40789 Monheim (DE); Ostholt , Rüdiger, D-58300 Wetter (DE); Becker, Klaus, D-58300 Wetter (DE)
(74) Vertreter: Presting, Hans-Joachim, Dipl.-Ing.

(56) Entgegenhaltungen:
- EP-A- 0 193 772
- DE-A- 2 823 048
- DE-A- 3 151 402
- US-A- 3 645 405

## Beschreibung

Die Erfindung betrifft eine Vorrichtung zum Güterumschlag von Ladungseinheiten, insbesondere von Containern, gemäß dem Oberbegriff des Anspruches 1.

Derartige Güterumschlagsvorrichtungen richten sich nach der Höhe der auf dem Fahrzeug aufstehenden Ladungseinheit, die um einen Freibetrag angehoben, horizontal bewegt und auf eine neue Standfläche abgesetzt wird. Eine damit verbundene Ausladung sowie die Baugrößen der Bewegungsmittel wie auch der Greifeinrichtung bestimmen die Bemessung des Fahrrahmens, der auf Schienen bzw. in Fahrspuren bewegbar ist.

Aus der DE 28 23 048 A1 ist eine Umladevorrichtung für Warenbehälter bekannt, die im wesentlichen aus einem verfahrbaren Portalrahmen besteht, in dem ein Hubrahmen höhenverfahrbar geführt ist. An der Unterseite des Hubrahmens sind zwei jeweils nach beiden Seiten und horizontal ausfahrbare Teleskopausleger befestigt, an dessen dem Hubrahmen abgewandten Ende ein als Greifeinrichtung ausgebildetes Lastaufnahmemittel für die Warenbehälter über Kolben-Zylinder-Einheiten angelenkt ist. Die Teleskopausleger sind jeweils aus drei Teleskopschüssen aufgebaut. Mit einer derartigen Umladevorrichtung ist es möglich, Warenbehälter unter einem Oberleitungs-Fahrdraht einer elektrifizierten Eisenbahnstrecke auf einen Eisenbahnwaggon zu laden bzw. von diesem aufzunehmen.

Diese Umladevorrichtung erweist sich jedoch als nachteilig, da die Anordnung des höhenverfahrbaren Hubrahmens innerhalb des Portalrahmens und eines hieran über Teleskopauslegern befestigten Greiferrahmens konstruktiv sehr aufwendig ist. Außerdem kann die Genauigkeit der Einfahrbewegung des Warenbehälters unterhalb des Oberleitungs-Fahrdrahtes durch die spielbehafteten Führungen zwischen den einzelnen Teleskopschüssen beeinträchtigt werden.

Eine andere Bauweise einer Einrichtung zum Umschlagen von Stückgut (DE 41 20 922 A1) sieht Zugumschlaghebezeuge an Kranträgern vor. Die Anwendung von Kranträgern bedingt große Bauhöhen und hohe Überdachungsabschnitte. Mehrere Hebezeuge erfordern zweistöckig umlaufende Palettenbänder, die nach Art eines horizontal ausgerichteten Paternosters arbeiten. Zudem verlangt eine solche Anordnung trotzdem einen Teleskopausleger. Bei Auslegung sämtlicher Baugruppen auf ein maximales Transportgewicht (z.B. Container von 40 t und mehr) wäre ein weitergehender Aufwand unvermeidlich.

Der vorliegenden Erfindung liegt die Aufgabe zugrunde, auch für große Lasten (z.B. 40-Tonnen-Container und mehr) eine relativ einfache und leichte Vorrichtung zu schaffen, die bei geringem Flächenbedarf ein seitliches oder seitlich-schräges Einfahren der Horizontaltransportmitte mit der Greifeinrichtung unterhalb des Fahrdrahtes in einer kürzestmöglichen Zeit gestattet, wobei die Umschlagzeit deutlich verkürzt werden soll.

Die gestellte Aufgabe wird erfindungsgemäß dahingehend gelöst, daß die Transportmittel unmittelbar und gemeinsam auf dem Fahrrahmen drehgelagert sind und daß die Greifeinrichtung über eine seitliche Schwenkbewegung eines Schwenkarmes und eine während der Schwenkbewegung erfolgende Betätigung einer Längs-Verschiebeeinrichtung, die im Schwenkarm angeordnet ist, unter Einhaltung eines Mindestabstandes unter dem Oberleitungs-Fahrdraht vorbeibewegbar ist. Diese Lösung gestattet das Einfahren des Schwenkarmes mit der Längs-Verschiebeeinrichtung mit einer senkrechten Komponente, also unter einem Winkel bei Einhaltung eines Mindestabstandes (von ca. 300 mm Radius) vorbei an dem Oberleitungs-Fahrdraht Dadurch entstehen Vorteile für die Lagerung der Transportmittel und die Unterbringung der entsprechenden Antriebe.

Vorteilhaft ist hier, daß die Schwenkachse in Fahrtrichtung mittig auf Querholmen mittels eines Lagerbockes vorgesehen ist. Diese Bauweise führt zu einer symmetrischen Beanspruchung der Bauteile des Fahrrahmens.

Die erforderlichen Mittel zur Aufnahme einer Ladungseinheit, z.B. eines Containers, bestehen nach einem weiteren Merkmal darin, daß an dem Ende des Schwenkarms die Greifeinrichtung gelenkig befestigt ist. Dieses Gelenk dient gleichzeitig zur Anpassung eines als Spreader ausgeführten Greifers, sich den Verriegelungsmitteln eines Containers anzupassen.

Eine Verbesserung der Erfindung wird dahingehend erzielt, daß zumindest ein Schwenkarm zwischen in Fahrtrichtung beabstandeten Paaren von seitlichen Säulen mit jeweils einem Querholm vorgesehen ist, die mittels jeweils seitlich angeordneten Längsholmen den Fahrrahmen bilden. Auf den Längsholmen können daher der Lagerbock für die Schwenkachse, Antriebsmittel u.dgl. angeordnet werden, so daß eine günstige Raumausnutzung entsteht.

Eine Lagerung des Schwenkarmes, der unter Last Hubbewegungen durchzuführen hat, wird dadurch geschaffen, daß der Schwenkarm durch ein erstes Führungsgehäuse hindurch verlaufend verschieblich gelagert ist, das in dem Lagerbock drehbar aufgenommen ist. Hierbei können durch geeignete Rollenführungen die aus der Last resultierenden Reibungskräfte reduziert werden.

Eine weiterhin günstige Aufnahme der Reaktionskräfte wird nach weiteren Merkmalen der Erfindung dadurch geschaffen, daß der nach oben ragende Längenabschnitt des Schwenkarms in einer kreisbogenförmigen Führung, die auf dem Querholm befestigt ist, abgestützt ist. Diese kreisbogenförmige Führung gestattet eine zweckmäßige Antriebsübertragung auf den Schwenkarm, um diesen zu schwenken, und übernimmt außerdem die Abstützung der Reaktionskräfte, die von dem am Schwenkarm befestigten Antrieb bewirkt werden.

Es kann ferner auch vorteilhaft sein, daß sich der Schwenkarm über ein zweites Führungsgehäuse mittels einer oder mehrerer Rollen auf den Umfang der kreisbogenförmigen Führung abstützt. Dadurch wird eine noch günstigere Aufnahme der aus der Last und dem Eigengewicht des Schwenkarms herrührenden Lagerkräfte erzielt und außerdem kann der Antrieb für die Bewegung des Schwenkarms an dem zweiten Führungsgehäuse gelagert werden.

Eine weitere Ausgestaltung der Erfindung sieht vor, daß an dem zweiten Führungsgehäuse ein Gegengewicht zu dem die Ladungseinheit aufnehmenden Hebelarm des Schwenkarms angeordnet ist. Wie erwähnt, kann ein solches Gegengewicht schon aus dem Antrieb für die Bewegung des Schwenkarms bestehen, es kann jedoch auch ein Zusatzgewicht angebracht werden, das entsprechend den Hebellängen bemessen ist.

Eine weitere Verbesserung der Erfindung sieht vor, daß eine oder mehrere der Rollen mit einem Drehantrieb verbunden sind, der am zweiten Führungsgehäuse befestigt ist. Über diese Rollen ist sowohl die Führungsqualität als auch die Größe der Antriebskraft zu beeinflussen.

Eine weitere Verbesserung ist dahingehend vorgesehen, daß der Schwenkarm mittels einer Anschlagrolle, die an einer Säule des Fahrrahmens angebracht ist, auf Mindestabstand zu dem Fahrdraht gehalten ist. Dadurch wird die Gefahr der Berührung des Fahrdrahtes praktisch ausgeschlossen.

Eine Verbesserung besteht noch darin, daß die Schwenkantriebe aus Kolben-Zylinder-Einheiten oder aus Drehantrieben gebildet sind. Hier können die Drehantriebe gleichzeitig als Gelenk mit Winkelgetrieben u.dgl. ausgeführt sein.

Zur Unterstützung der Kinematik kann an dem Schwenkarm ein Gegengewicht zu dem die Ladungseinheit aufnehmenden Ende des Schwenkarmes angeordnet werden.

Ein Ausführungsbeispiel der Erfindung ist in der Zeichnung dargestellt und wird im folgenden näher beschrieben. Es zeigen:

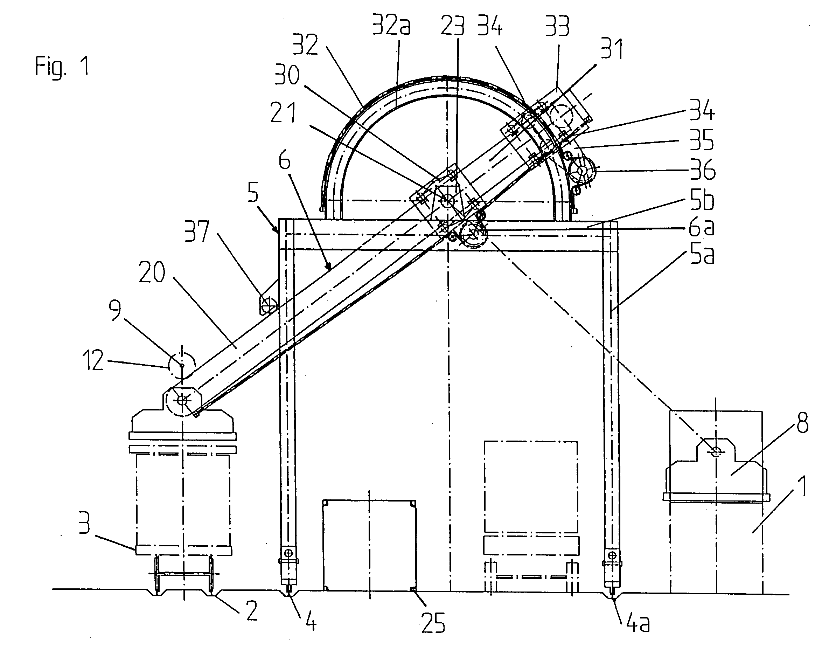

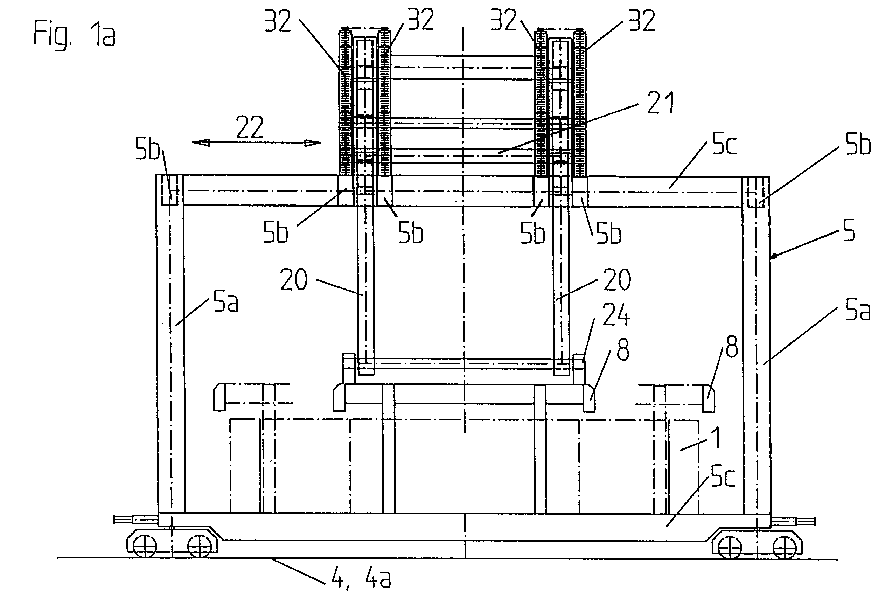

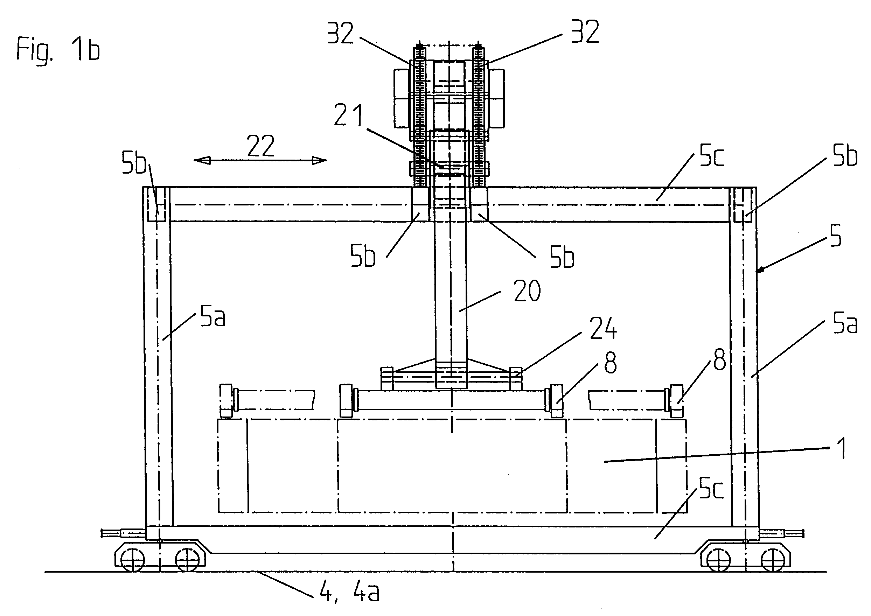

- Fig. 1: eine Vorderansicht einer Güterumschlagvorrichtung,
- Fig.1A: eine zu Fig.1 gehörende Seitenansicht,
- Fig.1B: eine zu Fig. 1 gehörende Seitenansicht in veränderter Ausführungsform.

Die Figuren 1, 1A, 1B zeigen eine Güterumschlagvorrichtung für Ladungseinheiten 1, wie z.B. Containern, die unmittelbar neben dem Schienenstrang 2 für Waggons 3 angeordnet ist und einen auf einem Schienenpaar 4 verfahrbaren Fahrrahmen 5 aufweist. Der Güterumschlag kann zwischen Verkehrsmitteln Schiene/Schiene oder Schiene/Straße oder zu einem nicht näher dargestellten Förder-oder Lagersystem in beiden Richtungen erfolgen. Der Fahrrahmen 5 kann daher auch mittels bereifter Räder oder Raupenketten in einer Fahrspur 4a verfahrbar sein.

Der Fahrrahmen 5 ist aus paarweise angeordneten linken und rechten Säulen 5a, jeweils mit den Säulen 5a verbundenen (oberen und unteren) Querholmen 5b und diese verbindende Längsholme 5c gebildet (Fig. 1A).

An dem Fahrrahmen 5 befinden sich Transportmittel 6, an die eine Greifeinrichtung 8 angeschlossen ist.

Der Fahrrahmen 5 ist parallelverlaufend und unmittelbar im Arbeitsbereich neben dem Schienenstrang 2 einer Güterzugstrecke 2a bewegbar, wobei über dem Schienenstrang 2 ein Oberleitungs-Fahrdraht 9 verläuft. Die Transportmittel 6 sind unmittelbar an dem Fahrrahmen 5 geführt. Die Transportmittel 6 sind dabei unter Einhaltung eines vorgeschriebenen Radius 12 von ca. 300 mm um den Oberleitungs-Fahrdraht 9 herum ohne Gefahr dessen Berührung vorbeizubewegen.

Die Transportmittel 6 sind als zwei, auf Querholmen 5b aufgestützte Schwenkarme 20 mit einer Längs-Verschiebeeinrichtung 6a augebildet. Die Schwenkarme 20 drehen um eine in Fahrtrichtung 22 verlaufende Schwenkachse 21. Dabei ist im Ausführungsbeispiel die Schwenkachse 21 in Fahrtrichtung 22 mittig auf mehreren Querholmen 5b mittels eines Lagerbockes 23 angeordnet. Außerdem ist an dem dem Schienenstrang 2 zugewandten Ende des Schwenkarms 20 die Greifeinrichtung 8 über ein Gelenk 24 befestigt, so daß sich die als Spreader ausgeführte Greifeinrichtung 8 leicht in die Verriegelungen 25 der Ladeeinheiten 1 einführen läßt.

Die Längsverschiebeeinrichtung 6a sieht ein erstes Führungsgehäuse 30 für den verschieblich hindurchverlaufenden Schwenkarm 20 auf den verkürzten Querholmen 5b vor, wobei ein Schwenkarm 20 jeweils zwischen zwei solchen verkürzten Querholmen 5b gelagert ist. Jedes Führungsgehäuse 30 ist in einem Lagerbock 23 drehgelagert.

Der nach oben ragende Längenabschnitt 31, der sich je nach Winkellage des Schwenkarms 20 bzw. nach Höhenlage der Ladungseinheit 1 ändert, indem er sich durch das erste Führungsgehäuse 30 schiebt, ist in einer kreisbogenförmigen Führung 32, die sich auf Querholmen 5b aufstützt (bzw. aufstützen - vgl. Fig. 1A) gelagert.

Der Schwenkarm 20 stützt sich ferner über ein zweites Führungsgehäuse 33 mittels einer oder mehrerer Rollen 34 auf den Umfang 32a der kreisbogenförmigen Führung 32.

An dem zweiten Führungsgehäuse 33 kann auch ein Gegengewicht 35 zu dem die Ladungseinheit 1 aufnehmenden Hebelarm des Schwenkarms 20 angeordnet sein, das u.a. aus einem Drehantrieb 36 besteht. Dieser Drehantrieb 36 ist ohnehin für eine oder mehrere Rollen 34 erforderlich und an dem zweiten Führungsgehäuse 33 befestigt.

Ein Eindringen des Schwenkarms 20 in den Sicherheitsabstand (Radius 12) zu dem Oberleitungs-Fahrdraht 9 wird noch dadurch verhindert, daß der Schwenkarm 20 durch eine Anschlagrolle 37, die fest an einer Säule 5b des Fahrrahmens 5 angebracht ist, in seiner Endlage angehalten wird.

## Patentansprüche

1. Vorrichtung zum Güterumschlag von Ladungseinheiten (1), insbesondere von Containern, zwischen Waggons (3) auf Schienenstrecken (2) mit einem Oberleitungs-Fahrdraht (9) und Verkehrsmitteln oder einem Förder- oder Lagersystem mit an einem Fahrrahmen (5), der auf Schienen bzw. in Fahrspuren (4a) verfahrbar ist, angeordneten Transportmittel (6), mit einem an dem dem Fahrrahmen (5) abgewandten Ende des Transportmittels (6) angeordneten Lastaufnahmemittel (Greifeinrichtung 8) für die Ladungseinheiten (1), das unter den Oberleitungs-Fahrdraht (9) zur Aufnahme bzw. Abgabe der Ladungseinheiten (1) ein- bzw. ausfahrbar ist,
dadurch gekennzeichnet,
daß das Transportmittel (6) durch Schwenkarme (20) mit je einer Längs-Verschiebeeinrichtung (6a) gebildet ist, jeder Schwenkarm (20) unmittelbar auf dem Fahrrahmen (5) drehgelagert ist und das als die Greifeinrichtung (8) ausgebildete Lastaufnahmemittel über eine seitliche Schwenkbewegung des Schwenkarmes (20) und eine während der Schwenkbewegung erfolgende Betätigung der Längs-Verschiebeeinrichtung (6a) unter Einhaltung eines Mindestabstandes unter den Oberleitungs-Fahrdraht (9) ein- bzw. ausfahrbar ist.

2. Vorrichtung nach Anspruch 1,
dadurch gekennzeichnet,
daß der Schwenkarm (20) mit seiner Schwenkachse (21) in Fahrtrichtung (22) gesehen mittig auf Querholmen (5b) des Fahrrahmens (5) mittels eines Lagerbockes (23) gelagert ist.

3. Vorrichtung nach Anspruch 1 oder 2,
dadurch gekennzeichnet,
daß an dem Ende (20a) des Schwenkarms (20) die Greifeinrichtung (8) gelenkig befestigt ist.

4. Vorrichtung nach einem der Ansprüche 1 bis 3,
dadurch gekennzeichnet,
daß der Fahrrahmen (5) aus zwei voneinander in Fahrtrichtung (22) beabstandeten Paaren von seitlichen Säulen (5a) gebildet ist, die jeweils über einen Querholm (5b) und die Paare über Längsholme (5c) verbunden sind, und zumindest ein Schwenkarm (20) in Fahrtrichtung gesehen zwischen den Säulen (5a) gelagert ist.

5. Vorrichtung nach einem der Ansprüche 1 bis 4,
dadurch gekennzeichnet
daß der Schwenkarm (20) durch ein erstes Führungsgehäuse (30) hindurch verlaufend verschieblich gelagert ist, das in dem Lagerbock (23) drehbar aufgenommen ist.

6. Vorrichtung nach einem der Ansprüche 1 bis 5,
dadurch gekennzeichnet,
daß der nach oben ragende Längenabschnitt (31) des Schwenkarms (20) in einer kreisbogenförmigen Führung (32), die auf dem Querholm (5) befestigt ist, abgestützt ist.

7. Vorrichtung nach einem der Anspruch 5 oder 6,
dadurch gekennzeichnet,
daß sich der Schwenkarm (20) über ein zweites Führungsgehäuse (33) mittels einer oder mehrerer Rollen (34) auf den Umfang (32a) der kreisbogenförmigen Führung (32) abstützt.

8. Vorrichtung nach Anspruch 7,
dadurch gekennzeichnet,
daß an dem zweiten Führungsgehäuse (33) ein Gegengewicht (35) zu dem die Ladungseinheit (1) aufnehmenden Hebelarm des Schwenkarms (20) angeordnet ist.

9. Vorrichtung nach Anspruch 7 oder 8,
dadurch gekennzeichnet,
daß eine oder mehrere der Rollen (34) mit einem Schwenkantrieb (36) verbunden sind, der am zweiten Führungsgehäuse (33) befestigt ist.

10. Vorrichtung nach einem der Ansprüche 1 bis 9,
dadurch gekennzeichnet,
daß der Schwenkarm (20) mittels einer Anschlagrolle (37), die an einer Säule (5b) des Fahrrahmens (5) angebracht ist, auf Mindestabstand zu dem Fahrdraht (9) gehalten ist.

## Claims

1. A device for transferring load units (1), in particular freight containers, between wagons (3) on track sections (2) with an overhead contact wire (9) and means of transport or a conveyor or storage system with transport means (6) arranged on a travelling frame (5) which can be moved on rails or in travelling channels (4a), having a load suspension means (gripping means 8) for the load units (1), arranged on the end of the transport means (6) remote from the travelling frame (5), which means can be moved in or out beneath the overhead contact wire (9) for receiving or delivering the load units (1),
characterised in that
the transport means (6) is formed by pivot arms (20) with one longitudinal displacement means (6a) in each case, each pivot arm (20) is rotationally mounted directly on the travelling frame (5) and the load suspension means formed as the gripping means (8) can be moved in and out by means of a lateral pivoting movement of the pivot arm (20) and actuation of the longitudinal displacement means (6a), effected during the pivoting movement, whilst maintaining a minimum distance below the overhead contact wire (9).

2. A device according to Claim 1, characterised in that the pivot arm (20) is mounted with its pivot axis (21), viewed in the direction of travel (22), centrally on transverse spars (5b) of the travelling frame (5) by means of a pedestal (23).

3. A device according to Claim 1 or 2, characterised in that the gripping means (8) is fastened in articulated manner to the end (20a) of the pivot arm (20).

4. A device according to one of Claims 1 to 3, characterised in that the travelling frame (5) is formed of two pairs of lateral columns (5a) spaced apart from each other in the direction of travel (22), which columns are connected in each case by a transverse spar (5b) and the pairs are connected via longitudinal spars (5c), and at least one pivot arm (20) is mounted between the columns (5a), viewed in the direction of travel.

5. A device according to one of Claims 1 to 4, characterised in that the pivot arm (20) is displaceably mounted extending through a first guide housing (30) which is rotatably held in the pedestal (23).

6. A device according to one of Claims 1 to 5, characterised in that the upward-projecting length section (31) of the pivot arm (20) is supported in an arcuate guide (32) which is fastened to the transverse spar (5).

7. A device according to one of Claims 5 or 6, characterised in that the pivot arm (20) is supported on the periphery (32a) of the arcuate guide (32) via a second guide housing (33) by means of one or more rollers (34).

8. A device according to Claim 7, characterised in that a counterweight (35) to the lever arm of the pivot arm (20) which receives the load unit (1) is arranged on the second guide housing (33).

9. A device according to Claim 7 or 8, characterised in that one or more of the rollers (34) is/are connected to a pivot drive (36) which is fastened to the second guide housing (33).

10. A device according to one of Claims 1 to 9, characterised in that the pivot arm (20) is kept at a minimum distance from the contact wire (9) by means of a stop roller (37) which is attached to a column (5b) of the travelling frame (5).

## Revendications

1. Dispositif de transbordement de marchandises d'unités de charge (1), en particulier des conteneurs, entre des wagons (3) sur des étendues de rails (2) ayant un conducteur aérien (9) et des moyens de circulation ou un système de transport ou de stockage ayant des moyens de transport (6) agencés sur un cadre porteur (5), qui peut être déplacé sur des rails ou dans des voies de circulation (4a), un moyen de réception de charge (dispositif de prise 8), agencé à l'extrémité des moyens de transport (6) opposée au cadre porteur (5), pour les unités de charge (1), qui est déplacable sous le conducteur aérien (9) pour recevoir ou évacuer les unités de charge (1),
caractérisé en ce que les moyens de transport (6) sont formés par des bras pivotants (20) ayant, à chaque fois, un dispositif de déplacement longitudinal (6a), chaque bras pivotant (20) est monté rotatif directement sur le cadre porteur (5), et le moyen de réception de charge réalisé comme le dispositif de prise (8) peut être déplacé, par l'intermédiaire d'un mouvement de pivotement latéral du bras pivotant (20) et d'un actionnement, ayant lieu pendant le mouvement de pivotement, du dispositif de déplacement longitudinal (6a), en maintenant une distance minimale, sous le conducteur aérien (9).

2. Dispositif selon la revendication 1,
caractérisé en ce que le bras pivotant (20), avec son axe de pivotement (21), est monté, dans la direction de déplacement (22), de façon centrale sur des longerons transversaux (5b) du cadre porteur (5) au moyen d'un palier (23).

3. Dispositif selon la revendication 1 ou 2,
caractérisé en ce que le dispositif de prise (8) est fixé de façon articulée à l'extrémité (20a) du bras pivotant (20).

4. Dispositif selon une des revendications 1 à 3,
caractérisé en ce que le cadre porteur (5) est formé par deux paires, écartées l'une de l'autre dans la direction de déplacement (22), de montants latéraux (5a), qui sont reliés, à chaque fois, par l'intermédiaire d'un longeron transversal (5b) et les paires par l'intermédiaire de longerons longitudinaux (5c), et au moins un bras pivotant (20) est monté, dans la direction de déplacement, entre les montants (5a).

5. Dispositif selon une des revendications 1 à 4,
caractérisé en ce que le bras pivotant (20) est monté de façon mobile à travers un premier boîtier de guidage (30), qui est reçu de façon rotative dans le palier (23).

6. Dispositif selon une des revendications 1 à 5,
caractérisé en ce que le troncon longitudinal (31), orienté vers le haut, du bras pivotant (20) s'appuie dans un guide (32) en forme d'arc de cercle, qui est fixé sur le longeron transversal (5).

7. Dispositif selon une des revendications 5 ou 6,
caractérisé en ce que le bras pivotant (20) s'appuie, par l'intermédiaire d'un second boîtier de guidage (33), au moyen d'un ou plusieurs rouleaux (34), sur la périphérie (32a) du guide (32) en forme d'arc de cercle.

8. Dispositif selon la revendication 7,
caractérisé en ce que, sur le second boîtier de guidage (33), il est agencé un contrepoids (35) par rapport au bras de lever, recevant l'unité de charge (1), du bras pivotant (20).

9. Dispositif selon la revendication 7 ou 8,
caractérisé en ce qu'un ou plusieurs des rouleaux (34) sont reliés à un entraînement pivotant (36) qui est fixé au second boîtier de guidage (33).

10. Dispositif selon une des revendications 1 à 9,
caractérisé en ce que le bras pivotant (20) est maintenu au moyen d'un galet de butée (37), qui est appliqué sur un montant (5b) du cadre porteur (5), à une distance minimale par rapport au conducteur aérien (9).
